# FASCICULE DE BREVET EUROPEEN

(11) **EP 3 409 544 B1**
(45) Date de publication et mention de la délivrance du brevet: **16.12.2020**
(21) Numéro de dépôt: 18173925.1
(22) Date de dépôt: 23.05.2018
(51) Int. Cl.: B60S 1/48, B60S 1/08, B60S 1/52

(54) **SYSTEME DE NETTOYAGE POUR VEHICULE AUTOMOBILE**
REINIGUNGSSYSTEM FÜR KRAFTFAHRZEUG
CLEANING SYSTEM FOR MOTOR VEHICLE

(30) Priorité: 02.06.2017 FR 1754896
(43) Date de publication de la demande: 05.12.2018
(73) Titulaire: Valeo Systèmes d'Essuyage, 78322 Le Mesnil Saint Denis (FR)
(72) Inventeur: GIRAUD, Frédéric, 78322 LE MESNIL SAINT DENIS (FR); BILLOT, Philippe, 78322 LE MESNIL SAINT DENIS (FR); LE-CALVEZ, Gilles, 78322 LE MESNIL SAINT DENIS (FR); TREBOUET, Marcel, 78322 Le Mesnil Saint Denis (FR)
(74) Mandataire: Valeo Vision

(56) Documents cités:
- EP-A2- 2 639 121
- DE-A1-102011 116 618
- DE-A1-102014 210 608
- JP-A- 2006 143 150
- JP-A- 2007 055 562
- JP-A- 2010 064 640

## Description

La présente invention concerne les systèmes de nettoyage pour véhicule automobile, et plus particulièrement les systèmes de nettoyage pour les surfaces vitrées avant de ces véhicules automobiles.

Les véhicules automobiles sont couramment équipés de système d'essuyage pour assurer un balayage et un lavage du pare-brise ou de la lunette arrière et éviter que la vision qu'a le conducteur de son environnement ne soit perturbée. Ces systèmes d'essuyage sont classiquement entraînés par un bras d'entrainement effectuant un mouvement de va-et-vient angulaire et comportent des balais d'essuyage allongés, porteurs eux-mêmes de lames d'essuyage réalisées en une matière élastique. Ces lames frottent contre la surface vitrée et évacuent l'eau et/ou les salissures en les amenant en dehors du champ de vision du conducteur.

Afin de laver efficacement cette surface vitrée, ces systèmes d'essuyage comprennent classiquement un réservoir contenant un liquide destiné à être projeté sur la surface vitrée à nettoyer quelques fractions de seconde avant le passage de la lame d'essuyage du balai d'essuyage qui peut alors correctement nettoyer les salissures présentes sur cette surface vitrée.

Ce liquide nettoyant peut être projeté par un dispositif de projection disposé sur un capot ou sur une baie de pare-brise d'un véhicule. Des dispositifs de projection de ce liquide peuvent également être intégrés directement aux balais d'essuyage.

Un inconvénient des systèmes d'essuyage actuels réside dans le fait que l'utilisateur est contraint d'utiliser une même quantité de liquide qu'il souhaite nettoyer l'intégralité de la surface de son pare-brise ou bien simplement une portion de celle-ci. Il en résulte que la quantité de liquide utilisée est souvent disproportionnée par rapport à la surface du pare-brise à nettoyer, alors que les contraintes environnementales invitent les acteurs du monde automobile à limiter l'impact des véhicules sur l'environnement, en particulier en ce qui concerne la consommation d'eau.

Cet état de fait est à l'origine d'un autre inconvénient : ce liquide de nettoyage de la surface vitrée est contenu dans un réservoir qui est dimensionné pour contenir une quantité de liquide de nettoyage adaptée à un système de nettoyage qui arrose l'intégralité de la surface vitrée. Un tel réservoir est surdimensionné par rapport à la quantité de liquide réellement nécessaire, ce qui augmente le poids total du véhicule et la consommation en carburant de celui-ci. Ce réservoir occupe également une place précieuse dans le véhicule qui pourrait être utilisée à d'autres fins. Le document EP 2 639 121 A2 divulgue le préambule de la revendication indépendante 1.

La présente invention propose de remédier à ces inconvénients en proposant un système de nettoyage pour véhicule automobile capable de cibler la projection de liquide de nettoyage sur une zone précise du pare-brise, sans arroser d'autres zones du pare-brise. Les moyens mis en œuvre par ce ciblage sont tout particulièrement adaptés à l'environnement automobile. On comprend ainsi qu'en proposant de ne nettoyer que la zone du pare-brise qui est salie par une commande simple, la présente invention permet de réduire la consommation de liquide nettoyant, et en conséquence la taille du réservoir contenant ce liquide.

Le réservoir étant plus petit, le véhicule est plus léger, ce qui permet de réduire sa consommation en carburant. La disposition d'autres composants du véhicule est également facilitée par la place libérée dans la baie de pare-brise ou dans le compartiment avant du véhicule.

La présente invention concerne ainsi un système de nettoyage d'un pare-brise d'un véhicule automobile, comprenant au moins un bras d'entrainement et au moins un balai d'essuyage, le balai d'essuyage étant relié au bras d'entrainement, le système de nettoyage comportant au moins un dispositif de projection apte à projeter un liquide sur le pare-brise. Selon l'invention, le système de nettoyage comprend un organe de détermination d'une zone du pare-brise et un moyen d'activation de l'organe de détermination, une activation du bras d'entrainement et du dispositif de projection étant soumise à une information image d'une position de la zone sur le pare-brise émise par l'organe de détermination, l'organe de détermination étant configuré pour détecter une direction dans laquelle regarde un conducteur du véhicule.

Selon la présente invention, le dispositif de projection du système de nettoyage est porté par un dispositif d'essuyage, ce dispositif d'essuyage comprenant le balai d'essuyage et le bras d'entrainement auquel il est relié. On comprend donc que selon la présente invention, le dispositif de projection peut être porté indifféremment par le bras d'entrainement et/ou par le balai d'essuyage du dispositif d'essuyage.

L'organe de détermination, quel que soit sa forme de réalisation, est un dispositif capable d'isoler une zone limitée du pare-brise, inférieure à la surface totale du pare-brise. Le conducteur active l'organe de détermination grâce au moyen d'activation et regarde en direction de la zone du pare-brise qu'il souhaite voir nettoyer. L'organe de détermination détecte ainsi cette zone grâce à la direction du regard du conducteur.

Le moyen d'activation est quant à lui tout moyen qui autorise la mise en fonctionnement de l'organe de détermination, de manière à ce que celui-ci n'identifie la zone à nettoyer que lorsque le moyen d'activation le lui demande. On évite ainsi toute mise en fonctionnement intempestive du système de nettoyage selon l'invention.

On notera qu'il n'est pas question ici de diriger spécifiquement un jet de liquide de nettoyage sur une salissure, un tel système impliquant des moyens qui ne sont pas économiquement compatible par les contraintes économiques du milieu automobile. Le système selon l'invention utilise au contraire des moyens techniques compatibles avec ces contraintes économiques en faisant le choix de nettoyer une zone du pare-brise, c'est-à-dire une subdivision raisonnable et organisée de la surface du pare-brise.

Selon une caractéristique de la présente invention, l'information image de la position de la zone sur le pare-brise peut être reçue par un module de commande du bras d'entrainement et du dispositif de projection.

Avantageusement, le système de nettoyage comprend deux dispositifs d'essuyage respectivement destinés être montés côté conducteur et côté passager du véhicule. Selon la présente invention, chaque dispositif d'essuyage est alors équipé d'un dispositif de projection, ce dispositif de projection pouvant être porté par le bras d'entrainement du dispositif d'essuyage concerné et/ou par le balai d'essuyage de ce dispositif d'essuyage.

Selon un aspect de la présente invention, le pare-brise est virtuellement découpé en plusieurs zones correspondant à des secteurs angulaires, dans le plan du pare-brise, ces secteurs angulaires étant par exemple également sous-divisés pour former lesdites zones. Selon la zone déterminée par l'organe de détermination, le liquide est projeté sur ladite zone déterminée du pare-brise depuis le dispositif de projection de l'un des deux dispositifs d'essuyage. Ainsi, la quantité de liquide utilisé est réduite, ce qui permet de réduire la taille du réservoir contenant ce liquide et donc, en conséquence, de diminuer le poids et la consommation en carburant du véhicule.

Selon un aspect de la présente invention, le moyen d'activation est par exemple un interrupteur dont une première position permet l'activation, c'est-à-dire sa mise en fonctionnement, de l'organe de détermination et dont une deuxième position permet la désactivation, c'est-à-dire sa mise hors fonctionnement, de cet organe de détermination et un retour à un système de nettoyage dit « classique », c'est-à-dire un système de nettoyage configuré pour nettoyer indistinctement toute les zones de la surface du pare-brise.

Selon différents exemples de réalisation de la présente invention, l'organe de détermination et le module de commande peuvent former une unique unité ou être compris dans deux boîtiers distincts.

Selon une caractéristique de la présente invention, le dispositif de projection comprend une première partie et une deuxième partie, chacune affectée à différentes zones du pare-brise, le dispositif de projection comprenant des moyens de commande configurés pour une projection indépendante de chacune des parties du dispositif de projection.

On comprend donc que la première partie et la deuxième partie sont commandées indépendamment l'une de l'autre, ce qui permet de participer au ciblage du nettoyage et donc de réduire la quantité de liquide utilisée. Ainsi, selon la zone du pare-brise déterminée par l'organe de détermination, l'une ou l'autre des parties du dispositif de projection du dispositif d'essuyage sera utilisée afin de projeter le liquide sur le pare-brise, et plus particulièrement sur la zone déterminée, l'autre partie du dispositif de projection étant à l'arrêt.

Selon un exemple de réalisation de la présente invention, la première partie du dispositif de projection présente un orifice d'admission configuré pour permettre une admission du liquide dans cette première partie, la deuxième partie du dispositif de projection présente un orifice d'admission configuré pour permettre une admission du liquide dans cette deuxième partie, l'orifice d'admission de la première partie et l'orifice d'admission de la deuxième partie étant distincts l'un de l'autre.

Selon un autre exemple de réalisation de la présente invention, la première partie du dispositif de projection et la deuxième partie du dispositif de projection présentent un orifice d'admission commun configuré pour permettre l'admission du liquide dans la première partie du dispositif de projection et dans la deuxième partie de ce dispositif de projection. Selon ce mode de réalisation de la présente invention, le liquide est dirigé vers l'une ou l'autre de ces parties grâce à un clapet.

Lorsque le dispositif de projection est porté par le balai d'essuyage, la première partie et la deuxième partie de ce dispositif de projection peuvent par exemple être disposées de part et d'autre d'un dispositif de connexion entre le bras d'entrainement et le balai d'essuyage.

Selon une variante de réalisation de la présente invention, le dispositif de projection peut comprendre plus de deux parties, par exemple trois parties, chaque partie étant destinée au nettoyage de différentes zones du pare-brise.

Selon un deuxième mode de réalisation, connu de l'art antérieur, l'organe de détermination est configuré pour détecter une direction d'un mouvement du conducteur.

Concrètement, selon ce deuxième mode de réalisation, l'organe de détermination est configuré pour détecter une direction d'un membre supérieur du conducteur, par exemple une direction d'un bras, d'une main ou d'un doigt de ce conducteur.

Selon ce deuxième mode de réalisation, après avoir activé l'organe de détermination, le conducteur montre la zone à nettoyer et l'organe de détermination détecte et analyse le geste et la direction de ce geste pour en déduire la position de la zone du pare-brise à nettoyer.

Selon l'un ou l'autre de ces modes de réalisation, l'organe de détermination comprend au moins une caméra et un logiciel de traitement d'images. En comparant la direction du regard ou du geste du conducteur et un découpage virtuel du pare-brise préalablement enregistré, l'organe de détermination est capable de déterminer quelle zone du pare-brise est désignée par ce conducteur et ainsi de transmettre l'information image de la position de cette zone sur le pare-brise au module de commande. Pour rappel, selon l'invention le module de commande et l'organe de détermination peuvent être regroupés en un seul boîtier et les deux étapes de détermination de la zone du pare-brise et de transmission de l'information peuvent alors être combinées en une seule étape.

Selon un troisième mode de réalisation, connu de l'art antérieur, l'organe de détermination est un écran, par exemple tactile, sur lequel sont projetées différentes zones du pare-brise.

Selon ce troisième mode de réalisation, le conducteur sélectionne la zone du pare-brise sur cet écran tactile intégré au véhicule, et sur lequel sont projetées les différentes zones du pare-brise.

Selon un aspect de ce troisième mode de réalisation, l'organe de détermination est configuré pour détecter une pression appliquée par le conducteur sur une région de l'écran sur lequel sont projetées les différentes zones du pare-brise.

En comparant la région de l'écran au niveau de laquelle est exercée la pression par le conducteur avec le découpage virtuel du pare-brise, l'organe de détermination peut déterminer la zone du pare-brise sélectionnée par le conducteur.

Alternativement, la sélection de la région de l'écran correspondant à la zone du pare-brise à nettoyer peut être réalisée par des commandes externes, c'est-à-dire sans qu'il n'y ait de contact direct entre le conducteur du véhicule et l'écran sur lequel sont projetées les différentes zones du pare-brise. Ainsi, l'organe de détermination peut être configuré pour détecter une sélection d'une zone du pare-brise opérée au moyen d'un dispositif déporté de l'écran. Un tel dispositif est ici par exemple une molette de commande ou un pad.

L'invention concerne également un véhicule automobile comprenant au moins un système de nettoyage selon la présente invention.

Selon une caractéristique de la présente invention, le module de commande du système de nettoyage est un boîtier de commande électronique du véhicule automobile.

L'invention concerne encore un procédé de nettoyage d'une zone d'un pare-brise de véhicule automobile comprenant au moins une étape d'activation d'un organe de détermination d'une zone du pare-brise, une étape de détermination d'une zone du pare-brise par cet organe de détermination, une étape de mise en mouvement d'un bras d'entrainement d'un dispositif d'essuyage du pare-brise, et une étape de mise en marche d'un dispositif de projection d'un liquide lorsqu'un balai d'essuyage porté par le bras d'entrainement entre dans la zone du pare-brise, l'étape de détermination comprenant une détection d'une direction dans laquelle regarde un conducteur du véhicule.

Tel que précédemment mentionné, le système de nettoyage selon la présente invention peut comprendre un module de commande du bras d'entrainement et du dispositif de projection. Dans cette configuration, le module de commande reçoit l'information image de la position de la zone du pare-brise déterminée et initie en conséquence l'étape de mise en mouvement du bras d'entrainement, puis celle de mise en marche du dispositif de projection du liquide lorsque le balai d'essuyage entre dans ladite zone du pare-brise.

Avantageusement, ce procédé peut également comprendre une étape d'arrêt du dispositif de projection lorsque le balai d'essuyage sort de la zone du pare-brise. Une fois le dispositif de projection arrêté, le sens du mouvement du bras d'entrainement est inversé afin que celui-ci revienne à une position initiale.

D'autres détails, caractéristiques et avantages ressortiront plus clairement à la lecture de la description détaillée donnée ci-après à titre indicatif en relation avec les différents modes de réalisation illustrés sur les figures suivantes :
- la figure 1 est une représentation schématique, en perspective, d'un dispositif d'essuyage d'un système de nettoyage selon la présente invention ;
- la figure 2 est une vue schématique, sous forme de synoptique, du fonctionnement du système de nettoyage selon la présente invention, comprenant entre autres le dispositif d'essuyage illustré sur la figure 1 ;
- la figure 3 est une représentation schématique d'un découpage virtuel d'un pare-brise destiné à être nettoyé par le système de nettoyage selon la présente invention ;
- les figures 4 à 6 sont des représentations schématiques de dispositifs de projection de liquide selon différents exemples de réalisation du système de nettoyage de la présente invention ;
- les figures 7 à 9 sont des représentations schématiques d'organes de détection d'une zone d'un pare-brise selon différents modes de réalisation du système de nettoyage de la présente invention.

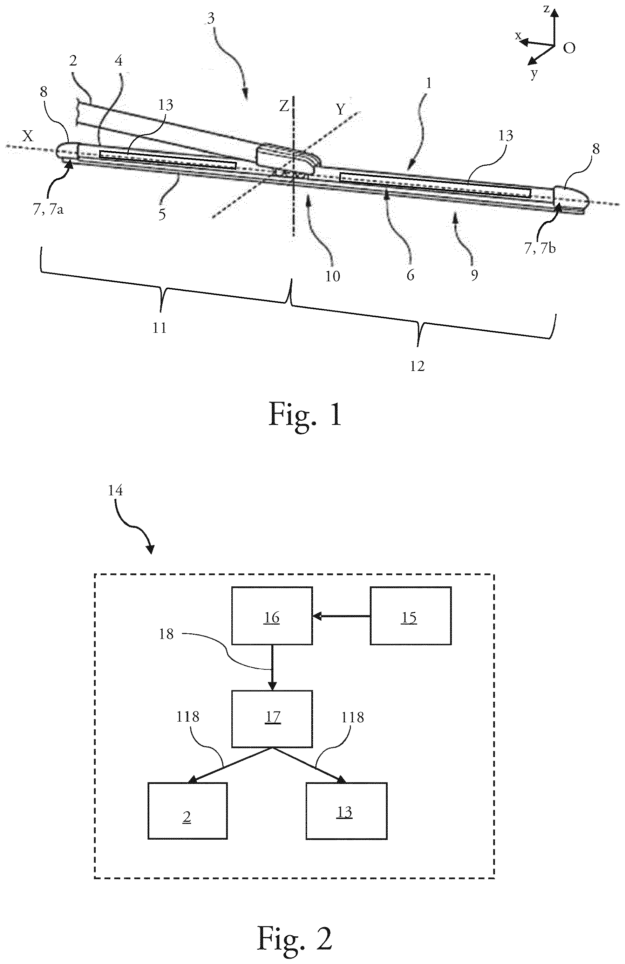

Sur les figures, les dénominations longitudinale, transversale, verticale, latérale, gauche, droite, supérieure, inférieure, se réfèrent à l'orientation, dans un repère orthonormé Oxyz, d'un balai d'essuyage 1 illustré sur la figure 1. Dans ce repère, l'axe Ox représente la direction longitudinale, l'axe Oy représente la direction transversale, et l'axe Oz représente la direction verticale du balai d'essuyage. Dans ce repère, un plan longitudinal est parallèle au plan Oxz, un plan transversal est parallèle au plan Oxy et un plan vertical est parallèle à un plan Oyz.

Sur la figure 1, un balai d'essuyage 1 de la présente invention s'étend selon un axe longitudinal X, parallèle à l'axe Ox. Les dénominations gauche et droite s'apprécient par rapport à une position le long d'un axe transversal Y, parallèle à l'axe Oy, de part et d'autre de l'axe longitudinal X. Un axe vertical Z symbolise une direction verticale, parallèle à celle de l'axe Oz, qui est perpendiculaire aux directions longitudinale et transversale décrites ci-dessus.

Pour la direction longitudinale, les dénominations extérieure ou intérieure s'apprécient par rapport à un point de pivotement d'un balai d'essuyage 1 sur un bras d'entraînement 2, la dénomination intérieure correspondant à la partie où le bras d'entraînement et un demi-balai s'étendent, la dénomination extérieure correspondant à la partie où l'autre demi-balai s'étend.

Un véhicule automobile est couramment équipé d'un dispositif d'essuyage 3 pour évacuer une eau et/ou des salissures présentes sur une surface vitrée, notamment une lunette arrière ou un pare-brise avant de véhicule automobile. Tel qu'illustré sur la figure 1, le dispositif d'essuyage 3 comprend le bras d'entraînement 2 qui est apte à effectuer un mouvement de va-et-vient angulaire le long et au-dessus de la surface vitrée.

Le dispositif d'essuyage 3 comprend aussi le balai d'essuyage 1 qui s'étend selon l'axe longitudinal X. Le balai d'essuyage 1 comprend une lame d'essuyage 5 qui s'étend également selon cet axe longitudinal X et au moins un déflecteur d'air 4. Le déflecteur d'air 4 est prévu pour transformer une pression appliquée par un flux d'air circulant le long de la surface vitrée en une force d'appui du balai d'essuyage 1 contre la surface vitrée du véhicule automobile.

La lame d'essuyage 5 est la pièce du balai d'essuyage 1 en contact direct avec la surface vitrée pour évacuer l'eau et/ou les salissures présentes sur cette dernière. La lame d'essuyage 5 est par exemple une lame souple réalisée en un matériau élastique, tel qu'un polymère ou un caoutchouc, notamment.

Le balai d'essuyage 1 comprend aussi un élément de structure 6 qui confère au balai d'essuyage 1 une certaine déformation dans le plan Oxz, de manière à répartir la force d'appui du bras d'entraînement 2 le long du balai d'essuyage 1. Cette déformation permet également au balai d'essuyage 1 de s'adapter au galbe de la surface vitrée. Un tel élément de structure 6 peut par exemple être formé par un unique organe de flexion, ou par une pluralité d'organes de flexion ou encore par un support dans lequel sont enfilés un ou plusieurs organes de flexion.

Le balai d'essuyage 1 comprend également à chacune de ses extrémités longitudinales 7 un embout d'extrémité 8. Chaque embout d'extrémité 8 est prévu pour maintenir ensemble la lame d'essuyage 5 et l'élément de structure 6. Eventuellement, chaque embout d'extrémité 8 peut également recouvrir une partie terminale du déflecteur d'air 4.

Le déflecteur d'air 4, la lame d'essuyage 5 et l'élément de structure 6 forment une structure semi-rigide 9 qui est portée par un dispositif de connexion 10, interposé entre une partie terminale du bras d'entraînement 2 et la structure semi-rigide 9. Un tel dispositif de connexion 10 comprend par exemple un connecteur solidaire au moins de manière isostatique de la structure semi-rigide 9, et un adaptateur relié par une liaison pivot au connecteur.

Le balai d'essuyage 1 présente une portion intérieure 11 et une portion extérieure 12 alignées le long de l'axe longitudinal X. Tel que représenté sur la figure 1, la portion intérieure 11 et la portion extérieure 12 du balai d'essuyage 1 sont respectivement comprises entre l'une de ses extrémités longitudinales 7 et le dispositif de connexion 10, ce dispositif de connexion 10 étant le point de pivotement du balai d'essuyage 1 sur son bras d'entraînement 2.

La portion intérieure 11 du balai d'essuyage 1 est ainsi délimitée longitudinalement d'une part par le dispositif de connexion 10 et d'autre part par l'extrémité longitudinale 7 la plus proche d'un point de rotation entre le bras d'entrainement 2 et le véhicule sur lequel est monté le dispositif d'essuyage 3, cette extrémité longitudinale 7 étant ci-après appelée « extrémité longitudinale intérieure 7a ».

La portion extérieure 12 du balai d'essuyage 1 est quant à elle délimitée d'une part par le dispositif de connexion 10 et d'autre part par l'extrémité longitudinale 7 la plus éloignée du point de rotation entre le bras d'entrainement 2 et le véhicule sur lequel est monté le dispositif d'essuyage 3, cette extrémité longitudinale 7 étant ci-après appelée « extrémité longitudinale extérieure 7b ».

Le dispositif d'essuyage 3 comprend également au moins un dispositif de projection 13 d'un liquide sur la surface vitrée permettant de faciliter le nettoyage des salissures. Selon l'invention, ce dispositif de projection 13 peut comprendre plusieurs parties, chacune configurée pour projeter le liquide sur des zones particulières de la surface vitrée.

Selon un exemple de réalisation par exemple illustré sur la figure 1, le dispositif de projection 13 est porté par le balai d'essuyage 1 et comprend une première partie 25 et une deuxième partie 26, chacune affectée à une portion 11, 12 du balai d'essuyage 1. Cette première partie 25 et cette deuxième partie 26 peuvent par exemple être agencées de part et d'autre du dispositif de connexion 10 entre le bras d'entrainement 2 et le balai d'essuyage 1.

De plus, la première partie 25 et la deuxième partie 26 peuvent être commandées de façon indépendante, ce qui participe au ciblage du nettoyage permis par la présente invention. Ce dispositif de projection 13 sera plus amplement détaillé dans la suite de la description.

Ce dispositif de projection 13 est activable manuellement et/ou de manière automatique par un conducteur et est configuré pour projeter le liquide le long du déplacement du balai d'essuyage 1 sur la surface vitrée. Avantageusement, la présente invention propose un système de nettoyage comprenant le dispositif d'essuyage 3 et permettant un nettoyage ciblé. Selon l'invention, un conducteur du véhicule sur lequel est monté le système de nettoyage peut indiquer une zone de la surface vitrée sur laquelle est présente la salissure et au niveau de laquelle doit être effectué le nettoyage.

Selon un autre exemple de réalisation non illustré ici, le dispositif de projection est porté par le bras d'entrainement auquel est relié le balai d'essuyage. Selon cet autre exemple de réalisation, le dispositif de projection peut comprendre plusieurs parties, chacune orientée différemment des autres afin de pouvoir projeter le liquide sur les zones particulières du pare-brise.

Le système de nettoyage selon la présente invention est particulièrement adapté à une utilisation sur un pare-brise avant du véhicule automobile.

La figure 2 illustre, sous la forme d'un synoptique, une mise en œuvre du système de nettoyage 14 selon la présente invention.

Le système de nettoyage 14 selon la présente invention comprend un moyen d'activation 15 d'un organe de détermination 16 d'une zone du pare-brise, un module de commande 17 et au moins un dispositif d'essuyage auquel est intégré le dispositif de projection 13 tel que précédemment décrit et comprenant notamment le bras d'entrainement 2 et le balai d'essuyage porté par ce bras d'entrainement 2. Avantageusement, le système de nettoyage 14 selon la présente invention comprend deux dispositifs d'essuyage, l'un étant monté côté conducteur du véhicule et l'autre étant monté côté passager de ce même véhicule.

Le système de nettoyage 14 selon la présente invention permet au conducteur de nettoyer uniquement une zone de son pare-brise, c'est-à-dire qu'il lui permet d'enclencher un nettoyage ciblé, moins consommateur de liquide qu'un nettoyage de la surface entière du pare-brise.

Tel que représenté sur la figure 2, le conducteur du véhicule doit, dans un premier temps, activer l'organe de détermination 16 de la zone du pare-brise grâce au moyen d'activation 15.

Ce moyen d'activation 15 peut par exemple être un interrupteur pouvant prendre deux positions, l'une d'entre elles permettant l'activation de l'organe de détermination 16 et l'autre permettant de désactiver cet organe de détermination 16. On comprend que si l'activation de l'organe de détermination 16 permet un nettoyage ciblé du pare-brise, sa désactivation entraine un nettoyage « classique », c'est-à-dire que le système de nettoyage nettoiera toute la surface du pare-brise, sans distinction de zones. Ainsi, la désactivation de l'organe de détermination 16 grâce au moyen d'activation 15 empêche une mise en fonctionnement intempestive du système de nettoyage, au moindre geste, regard ou touché.

Cet organe de détermination 16 est configuré pour déterminer la zone du pare-brise que le conducteur souhaite nettoyer. Tel que cela sera plus amplement décrit ci-après, cet organe de détermination 16 peut prendre plusieurs formes selon différents modes de réalisation de la présente invention. Une fois la zone du pare-brise déterminée, l'organe de détermination 16 envoie au module de commande 17 une information 18 image d'une position de cette zone sur le pare-brise.

L'information 18 peut par exemple être un signal binaire ou complexe circulant par un réseau multiplexé du véhicule sur lequel le système de nettoyage 14 est destiné à être monté.

Le module de commande 17 calcule en conséquence une instruction 118 qu'il transmet au bras d'entrainement 2 du dispositif d'essuyage 3, et aux dispositifs de projection 13 portés par ce dispositif d'essuyage tel que précédemment décrit. Le bras d'entrainement 2 est ainsi mis en mouvement afin d'atteindre la zone du pare-brise déterminée par l'organe de détermination 16. Lorsque l'un des balais d'essuyage du dispositif d'essuyage entre dans la zone déterminée, le dispositif de projection 13 du liquide est enclenché afin de projeter du liquide sur cette zone du pare-brise.

Le système de nettoyage 14 selon la présente invention peut également être configuré pour que la projection de liquide par le dispositif de projection 13 s'arrête lorsque le balai d'essuyage sort de la zone du pare-brise concernée.

Selon cette configuration, lorsque le balai d'essuyage sort de la zone déterminée par l'organe de détermination 16, le module de commande 17 stoppe la projection de liquide par le dispositif de projection 13 et change le sens du mouvement du bras d'entrainement 2 afin que celui-ci reprenne sa position initiale, c'est-à-dire une position en pied de pare-brise.

Selon la présente invention, le module de commande et l'organe de détermination peuvent former une seule unité ou bien deux unités distinctes.

Lorsqu'ils ne forment qu'une seule unité, l'étape de transmission de l'information image de la position de la zone sur le pare-brise est directe et ne passe pas par un câblage externe au boîtier puisque le module de commande est confondu avec l'organe de détermination qui détermine lui-même cette position de la zone sur le pare-brise.

Lorsque le module de commande et l'organe de détermination sont formés par deux unités distinctes, l'organe de détermination transmet l'information image de la position de la zone du pare-brise déterminée au module de commande par exemple par voie filaire. On comprend donc que selon cette configuration, l'organe de détermination et le module de commande sont deux entités distinctes connectées par un câble et que l'information image de la position de la zone du pare-brise déterminée transite de l'organe de détermination jusqu'au module de commande par ce câble.

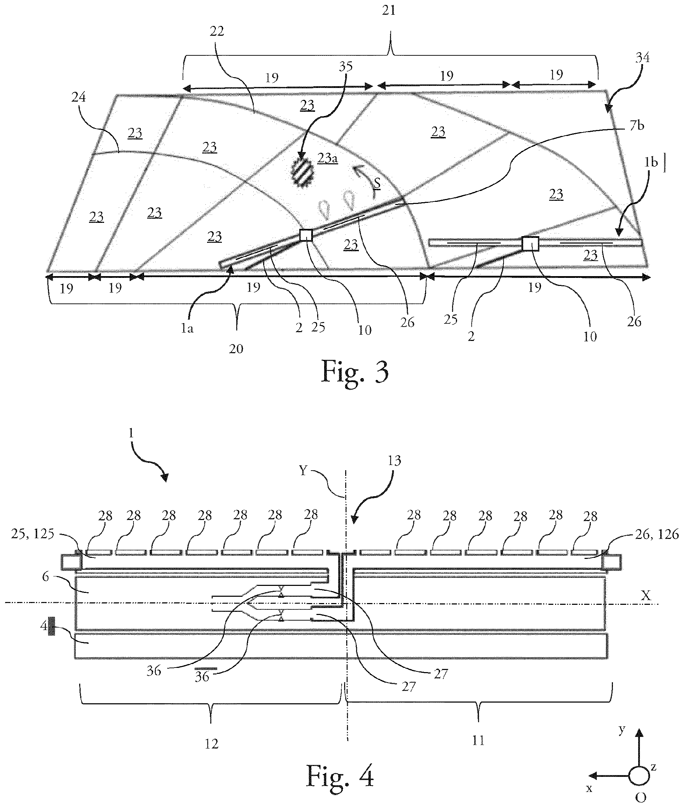

On comprend donc que, selon la présente invention, le pare-brise est virtuellement découpé en plusieurs zones, ce découpage virtuel étant par exemple illustré schématiquement sur la figure 3.

Tel qu'on peut le voir sur la figure 3, le pare-brise 34 est ainsi virtuellement découpé par exemple en sept secteurs angulaires 19, un premier groupe 20 de trois secteurs angulaires 19 étant accessible par un premier balai d'essuyage la monté côté conducteur et un deuxième groupe 21 de quatre secteurs angulaires 19 étant accessible par un deuxième balai d'essuyage 1b monté côté passager. On entend par « accessible », le fait que le balai d'essuyage la, 1b en question puisse balayer une surface du pare-brise 34 couverte par le premier groupe 20 de trois secteurs angulaires 19 ou par le deuxième groupe 21 de quatre secteurs angulaires 19.

La séparation entre le premier groupe 20 de secteurs angulaires 19 et le deuxième groupe 21 de secteurs angulaires 19 peut être matérialisée par une première courbe 22 le long de laquelle se déplace l'extrémité longitudinale extérieure 7b du premier balai d'essuyage la lorsque celui-ci est en mouvement.

Le premier groupe 20 de trois secteurs angulaires 19 est subdivisé pour créer sept zones 23 distinctes. Cette subdivision est réalisée au niveau d'une deuxième courbe 24 le long de laquelle se déplace le dispositif de connexion 10 du premier balai d'essuyage la, lorsque celui-ci est en mouvement. Le premier groupe 20 de secteurs angulaires 19 comprend ainsi quatre zones 23 extérieures et trois zones 23 intérieures, ces zones 23 étant respectivement accessibles par la portion extérieure du premier balai d'essuyage la et par la portion intérieure de ce premier balai d'essuyage la, telles que précédemment décrites.

Le deuxième groupe 21 de quatre secteurs angulaires 19 forme quant à lui quatre zones 23 du pare-brise 34.

La figure 3 représente également de façon schématique l'étape de projection du liquide sur la zone 23a du pare-brise 34 déterminée. Tel qu'illustré, cette projection de liquide intervient lorsque le balai d'essuyage la, 1b sollicité, en l'espèce le premier balai d'essuyage la, entre dans la zone 23a du pare-brise 34 déterminée par l'organe de détermination. Sur la figure 3 est représentée une flèche S indiquant le sens de déplacement de ce premier balai d'essuyage la avant que le liquide ne soit projeté, ainsi qu'une salissure 35 à nettoyer dans la zone 23 déterminée.

On comprend alors que le premier balai d'essuyage la balaye la zone 23 du pare-brise 34 une fois que le liquide a été projeté. Tel que cela a été décrit en référence à la figure 2, la projection de liquide cesse dès lors que le premier balai d'essuyage la quitte la zone 23 du pare-brise 34 déterminée. Une fois la salissure 35 nettoyée, les balais d'essuyage la, 1b reprennent une position initiale, c'est-à-dire une position en pied de pare-brise.

Selon un exemple de réalisation illustré sur la figure 3, chaque balai d'essuyage la, 1b comprend un dispositif de projection. Comme on peut le voir, selon la zone 23 du pare-brise 34 déterminée, le dispositif de projection de l'un ou l'autre des balais d'essuyage la, 1b est utilisé. De plus, tel que précédemment mentionné, chaque dispositif de projection comprend la première partie 25 et la deuxième partie 26, chacune affectée à une portion 11, 12 du balai d'essuyage la, 1b. Ainsi, en fonction de la zone 23 déterminée, seule une partie 26 du dispositif de projection de l'un des balais d'essuyage la pourra être enclenchée pour projeter du liquide sur la zone 23a du pare-brise 34, ce qui permet notamment de réduire encore la quantité de liquide utilisée.

Selon une variante de réalisation non illustrée ici, les dispositifs de projection sont agencés sur les bras d'entrainement auxquels sont reliés les balais d'essuyage, le principe de fonctionnement restant par ailleurs identique à celui décrit ci-dessus.

Les figures 4 à 6 illustrent schématiquement différents exemples de dispositif de projection 13 pouvant être intégrés au système de nettoyage selon la présente invention. Ces exemples ne sont donnés qu'à titre indicatif et d'autres configurations de dispositifs d'essuyage peuvent être envisagées, sans sortir du contexte de l'invention.

Sur la figure 4 est représentée une coupe d'un premier exemple de balai d'essuyage 1 intégrable au système de nettoyage selon la présente invention, cette coupe étant réalisée selon un plan transversal, parallèle au plan Oxy, et cette coupe étant vue de dessus. Sur cette figure sont ainsi illustrés, dans l'ordre de bas en haut le long de l'axe transversal Y, le déflecteur d'air 4, l'élément de structure 6 et le dispositif de projection 13 du balai d'essuyage 1.

Selon ce premier exemple, la première partie 25 et la deuxième partie 26 du dispositif de projection 13 sont formés par des canaux, un premier canal 125 étant agencé sur la portion extérieure 12 du balai d'essuyage 1 et un deuxième canal 126 étant agencé sur la portion intérieure 11 du balai d'essuyage 1. Tel qu'illustré, le premier canal 125 et le deuxième canal 126 s'étendent tous deux parallèlement à l'axe longitudinal X.

Le premier canal 125 et le deuxième canal 126 présentent, chacun, un orifice d'admission 27 du liquide destiné à être projeté sur le pare-brise. Ce premier canal 125 et ce deuxième canal 126 comprennent également des orifices de projection 28 par lesquels le liquide admis dans ces canaux 125, 126 est destiné à sortir pour être projeté sur le pare-brise. Chacun de ces canaux 125, 126 présentent ainsi une série d'orifices de projection 28, alignés les uns après les autres le long de l'axe longitudinal X.

On comprend que le liquide ne fait que passer par ces canaux 125, 126 avant d'être projeté sur la zone du pare-brise déterminée. Ainsi, un réservoir de ce liquide, non représenté ici, est intégré au véhicule et envoie le liquide vers le dispositif de projection 13 sur demande. Le premier canal 125 et le deuxième canal 126 disposent respectivement d'au moins un moyen d'ouverture/fermeture 36, par exemple agencés au niveau de leur orifice d'admission 27 du liquide.

Le dispositif de projection 13 peut comprendre des moyens de commande connectés de façon indépendante aux moyens d'ouverture/fermeture 36 du premier canal 125 et aux moyens d'ouverture/fermeture 36 du deuxième canal 126.

Ces moyens d'ouverture/fermeture 36 des canaux 125, 126, permettent ainsi de ne projeter du liquide qu'à partir du premier canal 125 ou qu'à partir du deuxième canal 126, en fonction de la zone du pare-brise déterminée. Ces moyens d'ouverture/fermeture 36 des canaux 125, 126 permettent donc de réduire la quantité de liquide projetée sur le pare-brise lors de l'utilisation du système de nettoyage selon la présente invention.

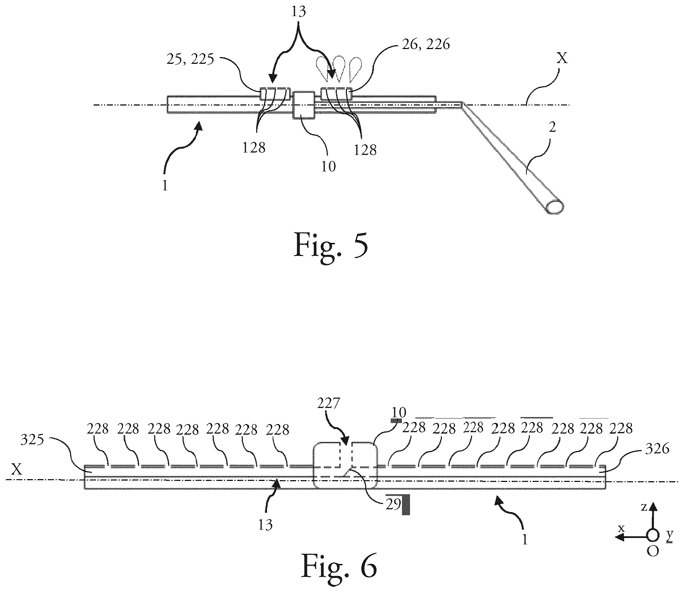

La figure 5 illustre un deuxième exemple de dispositif de projection 13. Le balai d'essuyage 1 est porté par son bras d'entrainement 2 et peut être intégré au système de nettoyage selon la présente invention. Selon ce deuxième exemple, la première partie 25 et la deuxième partie 26 du dispositif de projection 13 sont formées par un premier gicleur 225 et un deuxième gicleur 226 par exemple agencés longitudinalement de part et d'autre du dispositif de connexion 10 permettant la liaison mécanique entre le bras d'entrainement 2 et le balai d'essuyage 1. Chacun de ces gicleurs 225, 226 comprend un orifice d'admission du liquide, non visible sur cette figure, ainsi qu'une pluralité d'orifices de projection 128 par lesquels le liquide est projeté sur le pare-brise. On comprend que, comme pour le premier exemple illustré sur la figure 4, l'orifice d'admission du liquide du premier gicleur 225 est distinct de l'orifice d'admission du liquide du deuxième gicleur 226.

Le deuxième exemple de dispositif de projection 13, formé ici par un premier gicleur 225 et un deuxième gicleur 226, se distingue du premier exemple de dispositif de projection 13 par le fait que le premier gicleur 225 et le deuxième gicleur 226 sont rapportés sur le balai d'essuyage 1, alors que le dispositif de projection 13 selon le premier exemple est intégré au balai d'essuyage 1, c'est-à-dire indémontable du balai d'essuyage sans destruction soit du dispositif de projection, soit du balai d'essuyage.

Comme précédemment, le premier gicleur 225 et le deuxième gicleur 226 comprennent des moyens d'ouverture/fermeture contrôlable indépendamment les uns des autres afin d'utiliser uniquement la quantité de liquide nécessaire au nettoyage de l'une des zones du pare-brise.

Le principe de fonctionnement est identique à celui du premier exemple illustré et décrit en référence à la figure 4.

Selon une variante de ce deuxième exemple de réalisation, le premier gicleur et le deuxième gicleur composant le dispositif de projection peuvent être portés par le bras d'entrainement du dispositif d'essuyage. Selon cette variante, le premier gicleur et le deuxième gicleur sont alors orientés afin de permettre la projection du liquide sur l'ensemble du pare-brise, chaque gicleur étant configuré pour projeter le liquide sur des zones du pare-brise différentes de celles accessibles par l'autre gicleur.

La figure 6 représente quant à elle schématiquement un troisième exemple de dispositif de projection 13 intégré au balai d'essuyage 1 d'un système de nettoyage selon la présente invention. Selon ce troisième exemple, le dispositif de projection 13 comprend un premier tube 325 et un deuxième tube 326, ce premier tube 325 et ce deuxième tube 326 s'étendant respectivement selon l'axe longitudinal X. Comme pour le premier exemple, le premier tube 325 et le deuxième tube 326 font partie intégrante du balai d'essuyage 1 et ne sauraient en être séparés que par destruction de celui-ci.

Le premier tube 325 et le deuxième tube 326 partagent un unique orifice d'admission 227. En d'autres termes, le premier tube 325 et le deuxième tube 326 présentent un orifice d'admission 227 du liquide commun. Le liquide arrive donc du réservoir tel que précédemment décrit, jusqu'à cet orifice d'admission 227 commun au niveau duquel il est dirigé vers l'un ou l'autre des tubes 325, 326, grâce à un clapet 29 mobile entre au moins deux positions.

Une première position de ce clapet 29 permet la projection de liquide par le premier tube 325 et une deuxième position de ce clapet 29 permet la projection de liquide par le deuxième tube 326. Selon l'exemple illustré sur la figure 6, le clapet 29 est dans sa première position.

Le premier tube 325 et le deuxième tube 326 comprennent, chacun, une pluralité d'orifices de projection 228, tels que précédemment décrits.

On comprend donc que selon la zone du pare-brise déterminée en amont par l'organe de détermination, le module de commande est configuré pour orienter le clapet 29 afin de permettre la projection du liquide par les orifices de projection 228 du premier tube 325 ou par les orifices de projection 228 du deuxième tube 326 du dispositif de projection 13, en fonction de la zone à nettoyer.

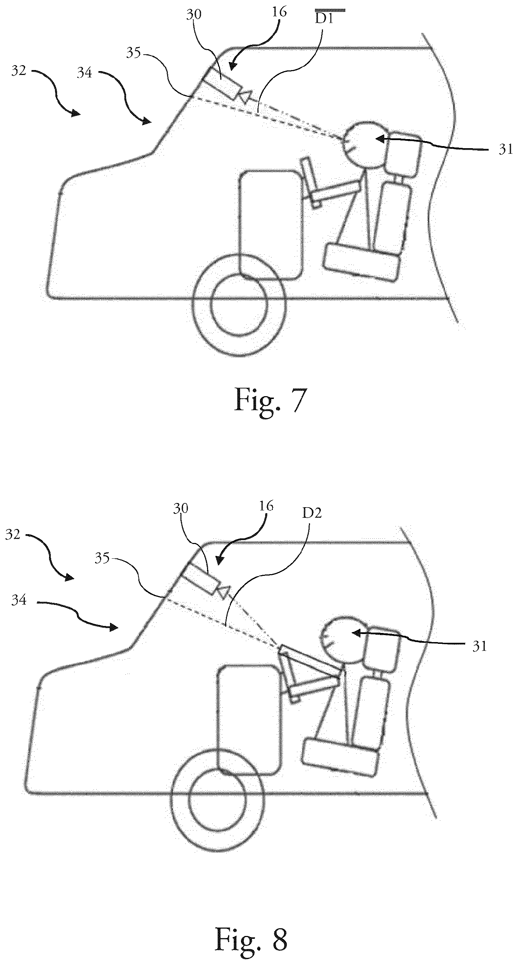

Tel que précédemment décrit, le système de nettoyage selon la présente invention comprend un organe de détermination de la zone du pare-brise que le conducteur souhaite nettoyer. Cet organe de détermination peut prendre différentes formes dont trois exemples sont représentés sur les figures 7 à 9.

Selon un premier mode de réalisation et un deuxième mode de réalisation respectivement représentés sur les figures 7 et 8, l'organe de détermination 16 de la zone du pare-brise 34 comprend une caméra 30 couplée à un logiciel de traitement d'image.

Selon le premier mode de réalisation illustré sur la figure 7, la caméra 30 couplée au logiciel de traitement d'images est configurée pour déterminer une direction D1 dans laquelle regarde le conducteur 31 du véhicule 32. Afin d'enclencher le nettoyage d'une salissure 35 présente sur le pare-brise 34, le conducteur 31 doit donc activer l'organe de détermination 16 puis regarder en direction de cette salissure 35.

En croisant la direction D1 du regard du conducteur 31 avec le découpage virtuel du pare-brise 34, l'organe de détermination 16 est en mesure de déterminer quelle zone du pare-brise 34 le conducteur 31 fixe du regard et d'envoyer en conséquence une information image de la position de cette zone sur le pare-brise 34 au module de commande lui-même configuré pour transmettre une ou plusieurs instructions permettant le nettoyage de cette zone du pare-brise, tel que décrit ci-dessus.

Selon le deuxième mode de réalisation illustré sur la figure 8, la caméra 30 couplée au logiciel de traitement d'images est configurée pour déterminer une direction D2 d'orientation d'un bras, d'une main ou d'un doigt du conducteur 31, tel qu'illustré sur cette figure 8. Afin d'enclencher le nettoyage d'une salissure 35 présente sur le pare-brise 34, le conducteur 31 doit ainsi activer l'organe de détermination 16 puis faire un geste indiquant la direction de cette salissure 35.

En croisant la direction D2 du geste du conducteur 31 avec le découpage virtuel du pare-brise 34, l'organe de détermination 16 est en mesure de déterminer quelle zone du pare-brise le conducteur désigne par son bras, sa main ou son doigt et d'envoyer en conséquence une information image de la position de cette zone sur le pare-brise au module de commande lui-même configuré pour permettre le nettoyage de cette zone du pare-brise, tel que décrit ci-dessus.

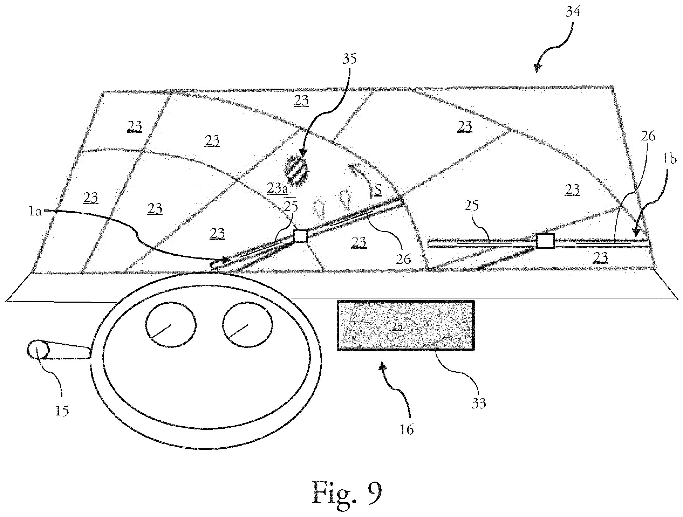

La figure 9 illustre quant à elle un troisième mode de réalisation du système de nettoyage selon la présente invention dans lequel l'organe de détermination 16 est un écran 33 sur lequel est affiché le découpage virtuel du pare-brise 34. Selon ce troisième mode de réalisation, le conducteur sélectionne directement sur l'écran 33 la zone 23 du pare-brise à nettoyer.

Selon un exemple de ce troisième mode de réalisation illustré sur cette figure 9, l'écran 33 sur lequel sont affichées les différentes zones 23 du pare-brise est un écran tactile. Le conducteur 31 doit dans un premier temps activer l'organe de détermination 16 grâce au moyen d'activation 15, par exemple réalisé par une commande au volant. Une fois activé, l'organe de détermination 16 permet l'affichage des différentes zones 23 sur l'écran 33, par exemple en remplacement de la radio. Le conducteur 31 peut alors sélectionner la zone 23a du pare-brise 34 pour laquelle il souhaite mettre en fonctionnement le système de nettoyage selon la présente invention par simple pression de cette zone 23a au niveau de l'écran 33 tactile. Comme pour les autres modes de réalisation précédemment décrits, une information image de la position de cette zone 23a sur le pare-brise 34 est alors transmise au module de commande qui peut enclencher le nettoyage requis, tel qu'exposé plus haut.

Selon des variantes de ce troisième mode de réalisation, la sélection de la zone 23a du pare-brise par le conducteur peut être réalisée grâce à un bouton disposé en périphérie de l'écran et commandant une souris, ou encore grâce à un pad permettant de diriger une souris sur l'écran.

Ce troisième mode de réalisation présente l'avantage d'être simple à mettre en œuvre.

On comprend à la lecture de ce qui précède que la présente invention propose un système de nettoyage permettant un nettoyage ciblé du pare-brise, et plus exactement un nettoyage d'au moins une zone de ce pare-brise. Ce nettoyage ciblé permet de façon avantageuse de réduire la quantité de liquide nécessaire au nettoyage dudit pare-brise et, par conséquent, de réduire la taille du réservoir contenant ce liquide, ce qui entraine une diminution du poids du véhicule et donc une diminution de la consommation en carburant de ce véhicule.

L'invention ne saurait toutefois se limiter aux moyens et configurations décrits et illustrés ici, et elle s'étend également à tous moyens ou configurations équivalents et à toute combinaison technique opérant de tels moyens. En particulier, la forme, et la disposition du dispositif de projection du liquide et de l'organe de détermination peuvent être modifiées sans nuire à l'invention, dans la mesure où il remplit les mêmes fonctionnalités que celles décrites dans ce document.

## Revendications

1. Système de nettoyage (14) d'un pare-brise (34) d'un véhicule (32) automobile, comprenant au moins un bras d'entrainement (2) et au moins un balai d'essuyage (1, 1a, 1b), le balai d'essuyage (1, 1a, 1b) étant relié au bras d'entrainement (2), le système de nettoyage (14) comportant au moins un dispositif de projection (13) apte à projeter un liquide sur le pare-brise (34), le système de nettoyage (14) comprenant un organe de détermination (16) d'une zone (23) du pare-brise (34) et un moyen d'activation (15) de l'organe de détermination (16), une activation du bras d'entrainement (2) et du dispositif de projection (13) étant soumise à une information (18) image d'une position de la zone (23) sur le pare-brise (34) émise par l'organe de détermination (16), **caractérisé en ce que** l'organe de détermination (16) est configuré pour détecter une direction (D1) dans laquelle regarde un conducteur (31) du véhicule (32).

2. Système de nettoyage selon la revendication précédente, dans lequel l'information (18) image de la position de la zone (23) sur le pare-brise (34) est reçue par un module de commande (17) du bras d'entrainement (2) et du dispositif de projection (13).

3. Système de nettoyage (14) selon l'une quelconque des revendications précédentes, dans lequel le dispositif de projection (13) comprend une première partie (25, 125, 225, 325) et une deuxième partie (26, 126, 226, 326), chacune affectée à différentes zones (23) du pare-brise (34), le dispositif de projection (13) comprenant des moyens de commande configurés pour une projection indépendante de chacune des parties (25, 125, 225, 325 ; 26, 126, 226, 326) du dispositif de projection (13).

4. Véhicule (32) automobile comprenant au moins un système de nettoyage (14) selon l'une quelconque des revendications précédentes.

5. Procédé de nettoyage d'une zone (23) d'un pare-brise (34) de véhicule (32) comprenant au moins une étape d'activation d'un organe de détermination (16) d'une zone (23) du pare-brise (34), une étape de détermination d'une zone (23) du pare-brise (34) par cet organe de détermination (16), une étape de mise en mouvement d'un bras d'entrainement (2) d'un dispositif d'essuyage (3) du pare-brise (34), et une étape de mise en marche d'un dispositif de projection (13) d'un liquide lorsqu'un balai d'essuyage (1, 1a, 1b) porté par le bras d'entrainement (2) entre dans la zone (23) du pare-brise (34), l'étape de détermination comprenant une détection d'une direction (D1) dans laquelle regarde un conducteur (31) du véhicule (32).

6. Procédé de nettoyage selon la revendication précédente comprenant une étape d'arrêt du dispositif de projection (13) lorsque le balai d'essuyage (1, 1a, 1b) sort de la zone (23) du pare-brise (34).

## Patentansprüche

1. System zur Reinigung (14) einer Windschutzscheibe (34) eines Kraftfahrzeugs (32), umfassend mindestens einen Antriebsarm (2) und mindestens einen Wischerarm (1, 1a, 1b), wobei der Wischerarm (1, 1a, 1b) mit den Antriebsarm (2) verbunden ist, das Reinigungssystem (14) aufweisend mindestens eine Spritzvorrichtung (13), die geeignet ist, eine Flüssigkeit auf die Windschutzscheibe (34) zu spritzen, das Reinigungssystem (14) umfassend ein Element zum Bestimmen (16) eines Bereichs (23) der Windschutzscheibe (34) und ein Mittel zum Aktivieren (15) des Bestimmungselements (16), wobei eine Aktivierung des Antriebsarms (2) und der Spritzvorrichtung (13) einer Bildinformation (18) einer Position des Bereichs (23) auf der Windschutzscheibe (34) unterliegt, die vom Bestimmungselement (16) abgegeben wird, **dadurch gekennzeichnet, dass** das Bestimmungselement (16) dazu ausgebildet ist, eine Richtung (D1) zu erkennen, in welche ein Fahrer (31) des Fahrzeugs (32) blickt.

2. Reinigungssystem nach dem vorhergehenden Anspruch, wobei die Bildinformation (18) der Position des Bereichs (23) auf der Windschutzscheibe (34) von einem Modul zur Steuerung (17) des Antriebsarms (2) und der Spritzvorrichtung (13) empfangen wird.

3. Reinigungssystem (14) nach einem der vorhergehenden Ansprüche, wobei die Spritzvorrichtung (13) einen ersten Abschnitt (25, 125, 225, 325) und einen zweiten Abschnitt (26, 126, 226, 326) umfasst, die jeweils verschiedenen Bereichen (23) der Windschutzscheibe (34) zugewiesen sind, die Spritzvorrichtung (13) umfassend Steuerungsmittel, die für ein unabhängiges Spritzen jedes der Abschnitte (25, 125, 225, 325; 26, 126, 226, 326) der Spritzvorrichtung (13) ausgebildet sind.

4. Kraftfahrzeug (32), umfassend mindestens ein Reinigungssystem (14) nach einem der vorhergehenden Ansprüche.

5. Verfahren zur Reinigung eines Bereichs (23) einer Windschutzscheibe (34) eines Fahrzeugs (32) umfassend mindestens einen Schritt des Aktivierens eines Elements zum Bestimmen (16) eines Bereichs (23) der Windschutzscheibe (34), einen Schritt des Bestimmens eines Bereichs (23) der Windschutzscheibe (34) durch dieses Bestimmungselement (16), einen Schritt des Inbewegungversetzens eines Antriebsarms (2) einer Vorrichtung zum Wischen (3) der Windschutzscheibe (34), und einen Schritt des Inbetriebsetzens einer Vorrichtung zum Spritzen (13) einer Flüssigkeit, wenn ein Wischerarm (1, 1a, 1b), der vom Antriebsarm (2) getragen wird, in den Bereich (23) der Windschutzscheibe (34) eintritt, der Schritt des Bestimmens umfassend ein Erkennen einer Richtung (D1), in welche ein Fahrer (31) des Fahrzeugs (32) blickt.

6. Reinigungsverfahren nach dem vorhergehenden Anspruch, umfassend einen Schritt des Anhaltens der Spritzvorrichtung (13), wenn der Wischerarm (1, 1a, 1b) den Bereich (23) der Windschutzscheibe (34) verlässt.

## Claims

1. Cleaning system (14) for cleaning a windscreen (34) of a motor vehicle (32), comprising at least one drive arm (2) and at least one wiper (1, 1a, 1b), the wiper (1, 1a, 1b) being linked to the drive arm (2), the cleaning system (14) comprising at least one spraying device (13) capable of spraying a liquid onto the windscreen (34), the cleaning system (14) comprising a member (16) for determining a zone (23) of the windscreen (34) and a means (15) for activating the determination member (16), an activation of the drive arm (2) and of the spraying device (13) being subject to image information (18) on a position of the zone (23) on the windscreen (34) transmitted by the determination member (16), **characterized in that** the determination member (16) is configured to detect a direction (D1) of the gaze of a driver (31) of the vehicle (32).

2. Cleaning system according to the preceding claim, wherein the image information (18) on the position of the zone (23) on the windscreen (34) is received by a control module (17) of the drive arm (2) and of the spraying device (13).

3. Cleaning system (14) according to either one of the preceding claims, wherein the spraying device (13) comprises a first part (25, 125, 225, 325) and a second part (26, 126, 226, 326), each assigned to different zones (23) of the windscreen (34), the spraying device (13) comprising control means configured for an independent spraying of each of the parts (25, 125, 225, 325; 26, 126, 226, 326) of the spraying device (13) .

4. Motor vehicle (32) comprising at least one cleaning system (14) according to any one of the preceding claims.

5. Method for cleaning a zone (23) of a windscreen (34) of a vehicle (32) comprising at least a step of activation of a member (16) for determining a zone (23) of the windscreen (34), a step of determination of a zone (23) of the windscreen (34) by this determination member (16), a step of setting a drive arm (2) of a cleaning device (3) for cleaning the windscreen (34) in motion, and a step of starting up a device (13) for spraying a liquid when a wiper (1, 1a, 1b) borne by the drive arm (2) enters into the zone (23) of the windscreen (34), the determination step comprising a detection of a direction (D1) of the gaze of a driver (31) of the vehicle (32).

6. Cleaning method according to the preceding claim, comprising a step of stopping of the spraying device (13) when the wiper (1, 1a, 1b) leaves the zone (23) of the windscreen (34).
